# EUROPÄISCHE PATENTANMELDUNG

(11) **EP 1 291 700 A1**
(43) Veröffentlichungstag der Anmeldung: **12.03.2003**
(21) Anmeldenummer: 02019903.0
(22) Anmeldetag: 04.09.2002
(51) Int. Cl.: G02B 27/01

(54) **Head-Up-Display**

(30) Priorität: 07.09.2001 DE 10144075
(71) Anmelder: SIEMENS AKTIENGESELLSCHAFT, 80333 München (DE)
(72) Erfinder: Abel, Heinz-Bernhard, Dr., 63762 Grossostheim (DE); Noll, Heinrich, Dr., 64823 Gross-Umstadt (DE)

(57) **Zusammenfassung**

Die Erfindung bezieht sich auf ein Head-Up-Display mit einer Bilderzeugungseinheit 1 einer anzuzeigenden Bildinformation, die als Lichtstrahlen 2 von der Bilderzeugungseinheit 1 oder über eine Projektionsoptik auf eine teilreflektierende Windschutzscheibe 7 projizierbar ist. Die Bilderzeugungseinheit 1 weist eine OLED-Anzeige 8 zur Erzeugung der anzuzeigenden Bildinformation auf, vor der ein Lichtrichtungselement 14 angeordnet ist, durch das die von der OLED-Anzeige 8 erzeugten Lichtstrahlen 2 annähernd parallel zueinander richtbar sind.

## Beschreibung

Die Erfindung bezieht sich auf ein Head-Up-Display, insbesondere für ein Kraftfahrzeug, mit einer Bilderzeugungseinheit zur Erzeugung einer anzuzeigenden Bildinformation, die als Lichtstrahlen von der Bilderzeugungseinheit direkt oder über eine Projektionsoptik auf eine teilreflektierende Scheibe, insbesondere auf eine Windschutzscheibe projizierbar ist.

Bei derartigen Head-Up-Displays ist es bekannt, die Bilderzeugungseinheit als Flüssigkristallanzeige auszubilden, die die anzuzeigende Bildinformation erzeugt. Mittels einer hinter der Flüssigkristallanzeige angeordneten und die Flüssigkristallanzeige durchleuchtenden Lichtquelle wird die von der Flüssigkristallanzeige erzeugte Bildinformation als Lichtstrahlen direkt oder über eine Projektionsoptik auf einen teilreflektierenden Bereich einer Windschutzscheibe im Sichtbereich eines Fahrers eines Kraftfahrzeugs projiziert und von dort zum Fahrer gespiegelt. Dadurch entsteht ein für den Fahrer sichtbares virtuelles Bild im Abstand von einigen Metern etwa im Bereich des Beginns der Kühlerhaube des Kraftfahrzeugs, das der Fahrer mit dem Umfeld ohne Akkomodation der Augen problemlos gleichzeitig beobachten kann.

Damit ein solches virtuelles Bild bei möglichst allen Umgebungsbedingungen, insbesondere großer Umgebungshelligkeit, gut erkennbar und alphanumerische Zeichen gut lesbar sind, muß dessen Leuchtdichte möglichst größer als 5000 cd/m² sein. Dies bedingt aufgrund der Lichtverluste an Spiegeln bzw. Linsen und an der Windschutzscheibe eine Leuchtdichte von 20.000 - 30.000 cd/m² auf der Oberfläche der Flüssigkristallanzeige. Ist die Flüssigkristallanzeige eine farbige Flüssigkristallanzeige, muß aufgrund der niedrigen Transmission einer farbigen Flüssigkristallanzeige von 4 - 5 % eine Leuchtdichte von 500.000 cd/m² von der Lichtquelle hinter der Flüssigkristallanzeige erzeugt werden. Dabei hat die farbige Flüssigkristallanzeige einen Kontrast von kleiner 150, was zu einem aufgehellten Hintergrund der Flüssigkristallanzeige führt, der störend wirkt.

Die notwendige hohe Leuchtdichte der Hinterleuchtung der Flüssigkristallanzeige erfordert eine entsprechend hochdimensionierte Lichtquelle mit großem Energieverbrauch, deren große entwickelte Wärme durch große Kühlkörper, Lüfter oder andere Wärmeableiter abgeführt werden muß.

Darüber hinaus ist der Aufbau des Head-Up-Displays aufwendig und benötigt einen großen Einbauraum.

Aufgabe der Erfindung ist es daher ein Head-Up-Display der eingangs genannten Art zu schaffen, das einen einfachen, wenig Einbauraum erfordernden Aufbau besitzt, Farbdarstellungen ermöglicht und bei allen Umgebungsbedingungen eine gute Ablesbarkeit mit hohem Kontrast aufweist.

Diese Aufgabe wird erfindungsgemäß dadurch gelöst, daß die Bilderzeugungseinheit eine OLED-Anzeige zur Erzeugung der anzuzeigenden Bildinformation aufweist, vor der ein Lichtrichtungselement angeordnet ist, durch das die von der OLED-Anzeige erzeugten Lichtstrahlen annähernd parallel zueinander richtbar sind.

Da die OLED-Anzeige (Organic Light Emitting Diodes) eine selbstleuchtende Anzeige ist, sind weder eine zusätzliche Lichtquelle noch große Wärmeableiteinrichtungen erforderlich, so daß der Aufbau einfach ist und der erforderliche Einbauraum gering gehalten wird. Außerdem benötigt die OLED-Anzeige als selbstleuchtende Anzeige nur eine entsprechend dem Transmissionsgrad einer Flüssigkristallanzeige um das etwa zwanzigfache geringere Lichtmenge gegenüber der Verwendung einer Flüssigkristallanzeige

Insbesondere eine Farbdarstellung ist ohne zusätzlichen Aufwand möglich.

Der neutrale Hintergrund der OLED-Anzeige führt zu einem hohen Kontrast und damit zu einer guten Ablesbarkeit.

Durch das Lichtrichtungselement kann eine farbige OLED-Anzeige eine um das 10 - 20-fach geringere Leuchtdichte aufweisen, als eine entsprechende hinterleuchtete farbige Flüssigkristallanzeige, da das von der OLED-Anzeige emittierte Licht durch das Lichtrichtungselement in einen kleinen Raumwinkel gebündelt wird und so zu einer hohen nutzbaren Leuchtdichte angehoben wird. Diese kann 20.000 - 30.000 cd/m² erreichen, was zu einer guten virtuellen Darstellung in Farbe führt.

Um eine gute virtuelle Darstellung zu erreichen, ist es ausreichend, wenn die Lichtstrahlen in einen Winkel von kleiner etwa 30° richtbar sind.

Zur Reduzierung des erforderlichen Bauraums kann das Lichtrichtungselement auf der die Lichtstrahlen projizierenden Anzeigefläche der OLED-Anzeige angeordnet sein.

Das Lichtrichtungselement kann entweder eine flexible transparente Folie oder aber auch eine starre transparente Platte sein.

Um einen Lichtverlust zu reduzieren, ist das Lichtrichtungselement vorzugsweise ohne optische Grenzfläche auf die Oberfläche der OLED-Anzeige aufgebracht, da dabei keine Reflexionsverluste, insbesondere keine Totalreflexionsverluste beim Lichtübergang von der OLED-Anzeige zum Lichtrichtungselement auftreten.

Dazu kann insbesondere das Lichtrichtungselement auf die Oberfläche der OLED-Anzeige aufgeklebt sein.

Ist das transparente Substrat der OLED-Anzeige auf deren die Lichtstrahlen projizierenden Seite als Lichtrichtungselement ausgebildet, so übernimmt dieses Bauteil eine Doppelfunktion, was nicht nur zu einer Reduzierung der Bauteile führt, sondern auch Lichtverlustprobleme durch Reflexionsverluste der o.g. Art ausschließt.

Vorzugsweise ist das Lichtrichtungselement mit einer über seine Fläche sich erstreckenden Lichtführungsstruktur ausgebildet.

Dabei kann in einfach herstellbarer Weise die Lichtführungsstruktur eine Prismen-, insbesondere eine Mikroprismenstruktur, eine Linsen-, insbesondere eine Mikrolinsenstruktur oder eine Richtreflektor-, insbesondere eine Mikrorichtreflektorstruktur sein.

Weist die OLED-Anzeige eine Punkt-Matrix-Elektrode auf, die insbesondere frei programmierbar ist, so ist mit entsprechend serieller Ansteuerung eine Anzeige von veränderlichen Bildinformationen große Variabilität möglich.

Die OLED-Anzeige kann eine voll farbfähige Anzeige sein.

Um eine Größenkorrektur der darzustellenden Bildinformation zu erreichen und eine Verzerrung des Bildes aufgrund einer Krümmung der Scheibe zu kompensieren, können die Lichtstrahlen von der Bilderzeugungseinheit über ein Spiegelsystem auf die teilreflektierende Scheibe projizierbar sein, wozu das Spiegelsystem wenigstens einen Planspiegel und wenigstens einen Freiformflächenspiegel aufweisen kann.

Ist zwischen dem Spiegelsystem und der teilreflektierenden Scheibe eine transparente Abdeckung angeordnet, so dient dies zum Schutz des Spiegelsystems.

Dabei ist vorzugsweise die transparente Abdeckung gewölbt ausgebildet, um ein Blenden durch die Abdeckscheibe zu vermeiden.

Ausführungsbeispiele der Erfindung ist in der Zeichnung dargestellt und werden im folgenden näher beschrieben. Es zeigen
- Figur 1: eine schematische Darstellung eines Head-Up-Displays
- Figur 2: ein erstes Ausführungsbeispiel einer Bilderzeugungseinheit eines Head-Up-Displays nach Figur 1
- Figur 3: ein zweites Ausführungsbeispiel einer Bilderzeugungseinheit eines Head-Up-Displays nach Figur 1
- Figur 4: ein drittes Ausführungsbeispiel einer Bilderzeugungseinheit eines Head-Up-Displays nach Figur 1
- Figur 5: eine vergrößerte Darstellung des Ausschnitts "A" aus Figur 4.

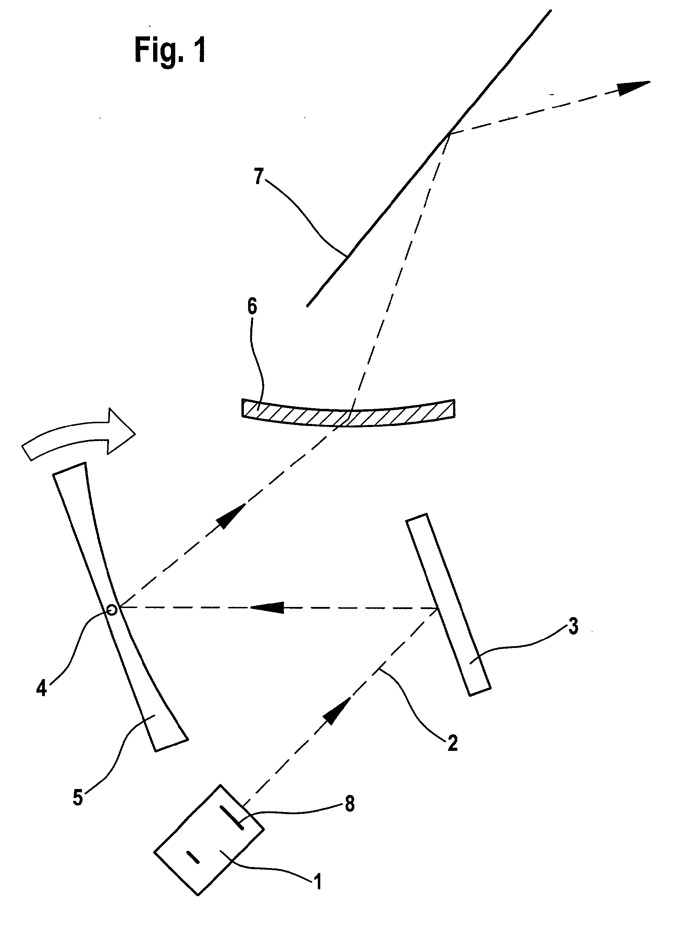

Das in Figur 1 dargestellte Head-Up-Display für ein Kraftfahrzeug besitzt eine Bilderzeugungseinheit 1, die eine OLED-Anzeige 8 aufweist. Die von der OLED-Anzeige erzeugten Bildinformationen, die z.B. Symbole für Tank, Temperatur und Ölstand, Zielführungshinweise einer Navigationseinrichtung oder aber auch alphanumerische Angaben der gefahrenen Geschwindigkeit oder der Motordrehzahl sein können, werden als Lichtstrahlen 2 über ein Spiegelsystem mit einem Planspiegel 3 und einem um eine Achse 4 drehbaren konkaven Freiformspiegel 5 sowie über eine gewölbte transparente Abdeckung 6 auf eine teilreflektierend ausgebildete Windschutzscheibe 7 des Kraftfahrzeugs projiziert und von der Windschutzscheibe 7 in das Gesichtsfeld eines Fahrers des Kraftfahrzeugs reflektiert.

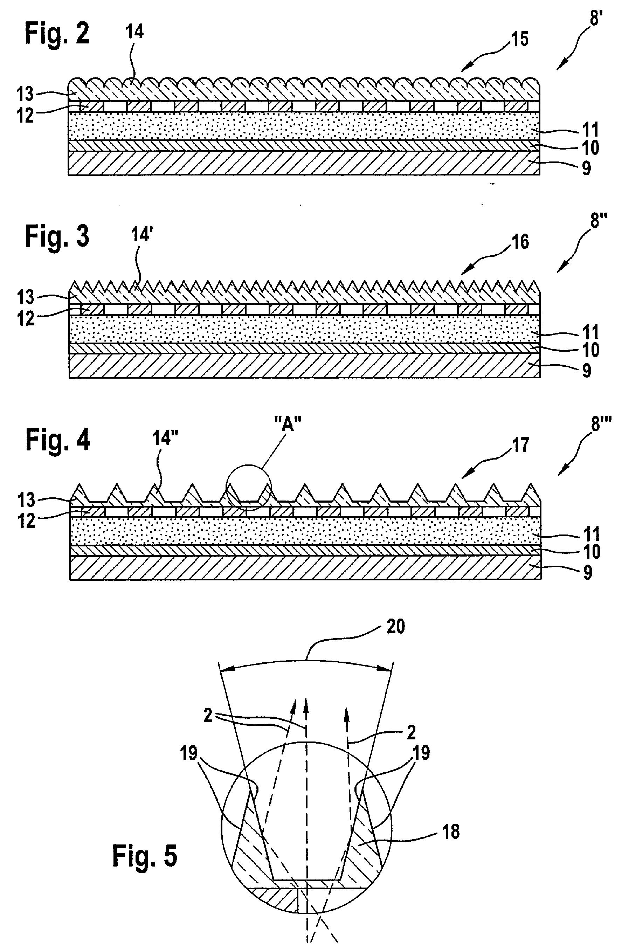

Die in den Figuren 2 bis 5 dargestellten OLED-Anzeigen 8', 8'', und 8''' weisen ein rückseitiges Substrat 9 auf, das als Kunststoffolie oder als starre Glasplatte ausgebildet sein kann. Auf dem Substrat 9 ist eine Flächenelektrode z.B. aus Metall als Rückelektrode 10 aufgebracht.

Diese trägt wiederum eine OLED-Schicht 11 (Organic Light Emitting Diodes)- Schicht, die aus einem organischen Polymer bestehen kann.

Auf der OLED-Schicht 11 ist eine transparente Punkt-Matrix-Elektrode 12 aus z.B. Indium-Zinn-Oxyd (ITO) angeordnet, die aus einer Vielzahl von separat mit einer Spannung ansteuerbaren Pixelpunkten besteht. Bei Anlegen einer Spannung an die Rückelektrode 10 und einzelne Pixelpunkte der Punkt Matrix-Elektrode 12 wird das OLED-Material der OLED-Schicht 11 im Bereich der angesteuerten Pixelpunkte zur Lichtemission angeregt.

Das emittierte Licht wird zur Frontseite der OLED-Anzeige 8', 8'' und 8''' abgestrahlt, auf der auf der Punkt-Matrix-Elektrode 12 ein transparentes Frontsubstrat 13 aufgeklebt ist. Das Frontsubstrat 13 ist als Lichtrichtungselement 14, 14' und 14'' mit einer sich über seine ganze frontseitige Fläche erstreckenden Lichtführungsstruktur ausgebildet.

In Figur 2 ist die Lichtführungsstruktur eine Mikrolinsenstruktur 15 von aneinander angrenzenden Linsen geringer Größe. Anstatt der Mikrolinsenstruktur in Figur 2 ist die Lichtführungsstruktur in Figur 3 eine Mikroprismenstruktur 16 von aneinander angrenzenden Prismen geringer Größe.

Die in den Figuren 4 und 5 vorhandene Lichtführungsstruktur ist eine Mikrorichtreflektorstruktur 17 von dicht aneinander angeordneten Reflektorelementen 18 geringer Größe, deren Außenflächen 19 verspiegelt sind. Die Neigung der Außenflächen 19 zur Ebene des Lichtrichtungselements 14'' ist derart, daß die zwischen den Reflektorelementen 18 hindurchtretenden und von der OLED-Schicht 11 emittierten Lichtstrahlen 2 innerhalb eines Winkels 20 von maximal 30° durch die verspiegelten Außenflächen 19 der Reflektorelemente 18 gerichtet zur Frontseite abgestrahlt werden (Figur 5).

Durch die Linsen und Prismen in den Figuren 2 und 3 wird ebenfalls das von der OLED-Schicht 11 emittierte Licht innerhalb eines Winkels von maximal 30° gerichtet zur Frontseite abgestrahlt.

Aufgrund der Mikrostruktur der Lichtrichtungselemente 14, 14' und 14'' besitzt das durch die Lichtstrahlen 2 auf die Windschutzscheibe 7 projizierte Bild eine derart hohe Auflösung, daß die einzelnen Bildpunkte durch das Auge des Fahrers nicht aufgelöst werden können und so ein homogenes Bild erkennbar ist.

Das Lichtrichtungselement kann auch aus einem mehrere Schichten aufweisenden Schichtensystem bestehen, das zu einer Lichtrichtung entsprechend der oben beschriebenen Lichtrichtungselemente führt.

## Patentansprüche

1. Head-Up-Display, insbesondere für ein Kraftfahrzeug, mit einer Bilderzeugungseinheit zur Erzeugung einer anzuzeigenden Bildinformation, die als Lichtstrahlen von der Bilderzeugungseinheit direkt oder über eine Projektionsoptik auf eine teilreflektierende Scheibe, insbesondere auf eine Windschutzscheibe projizierbar ist, **dadurch gekennzeichnet, daß** die Bilderzeugungseinheit (1) eine OLED-Anzeige (8, 8', 8'', 8''') zur Erzeugung der anzuzeigenden Bildinformation aufweist, vor der ein Lichtrichtungselement (14, 14', 14'') angeordnet ist, durch das die von der OLED-Anzeige (8, 8', 8'', 8''') erzeugten Lichtstrahlen (2) annähernd parallel zueinander richtbar sind.

2. Head-Up-Display nach Anspruch 1, **dadurch gekennzeichnet, daß** die Lichtstrahlen (2) in einen Winkel (20) von kleiner etwa 30° richtbar sind.

3. Head-Up-Display nach einem der vorhergehenden Ansprüche, **dadurch gekennzeichnet, daß** das Lichtrichtungselement (14, 14', 14'') auf der die Lichtstrahlen (2) projizierenden Anzeigefläche der OLED-Anzeige (8', 8'', 8''') angeordnet ist.

4. Head-Up-Display nach Anspruch 3, **dadurch gekennzeichnet, daß** das Lichtrichtungselement (14, 14', 14'') eine transparente Folie ist.

5. Head-Up-Display nach Anspruch 3, **dadurch gekennzeichnet, daß** das Lichtrichtungselement eine transparente Platte ist.

6. Head-Up-Display nach einem der Ansprüche 3 bis 5, **dadurch gekennzeichnet, daß** das Lichtrichtungselement (14, 14', 14'') ohne optische Grenzfläche auf die Oberfläche der OLED-Anzeige (8, 8', 8'', 8''') aufgebracht ist.

7. Head-Up-Display nach Anspruch 6, **dadurch gekennzeichnet, daß** das Lichtrichtungselement (14, 14', 14'') auf die Oberfläche der OLED-Anzeige (8', 8'', 8''') aufgeklebt ist.

8. Head-Up-Display nach einem der Ansprüche 1 und 2, **dadurch gekennzeichnet, daß** das transparente Substrat (13) der OLED-Anzeige (8', 8'', 8''') auf deren die Lichtstrahlen (2) projizierenden Seite als Lichtrichtungselement (14, 14', 14'') ausgebildet ist.

9. Head-Up-Display nach einem der vorhergehenden Ansprüche, **dadurch gekennzeichnet, daß** das Lichtrichtungselement (14, 14', 14'') mit einer über seine Fläche sich erstreckenden Lichtführungsstruktur ausgebildet ist.

10. Head-Up-Display nach Anspruch 9, **dadurch gekennzeichnet, daß** die Lichtführungsstruktur eine Prismen-, insbesondere eine Mikroprismenstruktur (16) ist.

11. Head-Up-Display nach Anspruch 9, **dadurch gekennzeichnet, daß** die Lichtführungsstruktur eine Linsen-, insbesondere eine Mikrolinsenstruktur (15) ist.

12. Head-Up-Display nach Anspruch 9, **dadurch gekennzeichnet, daß** die Lichtführungsstruktur eine Richtreflektor-, insbesondere eine Mikrorichtreflektorstruktur (17) ist.

13. Head-Up-Display nach einem der vorhergehenden Ansprüche, **dadurch gekennzeichnet, daß** die OLED-Anzeige (8', 8'', 8''') eine Punkt-Matrix-Elektrode (12) aufweist.

14. Head-Up-Display nach einem der vorhergehenden Ansprüche, **dadurch gekennzeichnet, daß** die OLED-Anzeige frei programmierbar ist.

15. Head-Up-Display nach einem der vorhergehenden Ansprüche, **dadurch gekennzeichnet, daß** die OLED-Anzeige eine voll farbfähige Anzeige ist.

16. Head-Up-Dispay nach einem der vorhergehenden Ansprüche, **dadurch gekennzeichnet, daß** die Lichtstrahlen (2) von der Bilderzeugungseinheit (1) über ein Spiegelsystem auf die teilreflektierende Scheibe projizierbar ist.

17. Head-Up-Display nach Anspruch 16, **dadurch gekennzeichnet, daß** das Spiegelsystem wenigstens einen Planspiegel (3) und wenigstens einen Freiformflächenspiegel (5) aufweist.

18. Head-Up-Display nach Anspruch 17, **dadurch gekennzeichnet, daß** zwischen dem Spiegelsystem und der teilreflektierenden Scheibe eine transparente Abdeckung (6) angeordnet ist.

19. Head-Up-Display nach Anspruch 18, **dadurch gekennzeichnet, daß** die transparente Abdeckung (6) gewölbt ist.
